# EUROPÄISCHE PATENTSCHRIFT

(11) **EP 2 634 880 B1**
(45) Veröffentlichungstag und Bekanntmachung des Hinweises auf die Patenterteilung: **26.07.2017**
(21) Anmeldenummer: 13000653.9
(22) Anmeldetag: 08.02.2013
(51) Int. Cl.: H02G 3/18, H02G 3/12

(54) **Unterputzeinsatz eines elektrischen /elektronischen Installationsgerätes der Hausinstallationstechnik mit Gerätesockel und Tragring**
Flush mounted insert for an electrical/electronic installation device for domestic installation with a device mount and support ring
Insert encastré d'un appareil d'installation électrique/électronique de technique d'installation domestique avec socle d'appareil et anneau de montage

(30) Priorität: 02.03.2012 DE 102012004260
(43) Veröffentlichungstag der Anmeldung: 04.09.2013
(73) Patentinhaber: ABB AG, 68309 Mannheim (DE)
(72) Erfinder: Mrkajic, Oliver, 58511 Lüdenscheid (DE); Schrage, Ortwin, 47906 Kempen (DE); Ewers, Manfred, 58239 Schwerte (DE); Diehl, Sven, 57078 Siegen (DE); Wiese, Michael, 42897 Remscheid (DE)

(56) Entgegenhaltungen:
- DE-A1- 10 213 849
- DE-A1-102008 035 722
- DE-B3-102009 060 379
- DE-C1- 4 121 846
- DE-U1- 29 911 298

## Beschreibung

Die Erfindung betrifft einen Unterputzeinsatz eines elektrischen / elektronischen Installationsgerätes der Hausinstallationstechnik mit Gerätesockel und Tragring. Es ist allgemein bekannt, die Befestigung eines Tragrings am Gerätesockel mittels Nieten vorzunehmen oder auch mittels vom Tragring abgebogener Metallzungen, welche durch Schlitze des Gerätesockels greifen und mittels Werkzeugeinsatz verdreht werden, um auf diese Weise eine Arretierung zu erzielen. Die DE 10 2008 035 722 A1 offenbart einen Unterputzeinsatz gemäss dem Oberbegriff des Anspruchs 1, Der Erfindung liegt die Aufgabe zugrunde, eine optimierte Befestigung eines Tragringes am Gerätesockel eines Unterputzeinsatz eines elektrischen / elektronischen Installationsgerätes der Hausinstallationstechnik anzugeben.

Diese Aufgabe wird erfindungsgemäß gelöst durch einen Unterputzeinsatz gemäss Anspruch 1. Die mit der Erfindung erzielbaren Vorteile bestehen insbesondere darin, dass die Verbindung so konzipiert ist, dass die Laschen des Tragrings über ihre Stege einen Formschluss mit der mechanischen Schnittstelle des Gerätesockels erzeugen. Nach dem Umformprozess entsteht ein zusätzlicher Kraftschluss, indem die Seitenschneiden der Stege abschnittsweise in die mechanischen Schnittstellen einschneiden. Vorteilhaft ist eine Bewegung senkrecht zum Tragring erforderlich, um die Laschen in Endposition zu bringen. Erfindungsgemäss weist der Steg einer Lasche endseitig Seitenschneiden auf, welche im umgebogenen Zustand in die Seitenrippen eingreifen und einschneiden. Erfindungsgemäss weisen die Seitenrippen der mechanischen Schnittstellen ausgeprägte Unterseiten für den Eingriff der Seitenschneiden auf.

Vorzugsweise ist die im montierten Zustand dem Tragring zugewandte Seite der mechanischen Schnittstelle mittels eines Steges versteift, welcher gleichzeitig als Biegekern für die Verformung der Lasche genutzt wird.

In weiterer Ausgestaltung bildet der Biegekern im fertig montierten Zustand ein Widerlager für die umgebogene Lasche. Somit bildet sich eine formschlüssige Verbindung aus.

Für die schnelle und präzise Positionierung des Tragrings gegenüber dem Gerätesockel weist die Frontseite des Gerätesockels mindestens zwei Führungszylinder auf, zu denen Bohrungen im Tragring in korrespondierender Weise angeordnet sind.

Die Erfindung wird nachstehend anhand der in der Zeichnung dargestellten Ausführungsbeispiele näher erläutert. Es zeigen:
- Fig. 1: eine perspektivische Seitenansicht eines Unterputzeinsatzes,
- Fig. 2: eine perspektivische Seitenansicht eines Unterputzeinsatzes vor der Befestigung des Tragrings am Gerätesockel,
- Fig. 3: eine perspektivische "Explosionsansicht" eines Unterputzeinsatzes,
- Fig. 4: Gerätesockel und Tragring als getrennte Baukomponenten,
- Fig. 5: eine Sicht auf die Frontseite eines Unterputzeinsatzes vor der Befestigung des Tragrings am Gerätesockel,
- Fig. 6: eine Detailansicht einer mechanischen Schnittstelle,
- Fig. 7: eine Detailansicht zur Erläuterung der Befestigung der Lasche an der mechanischen Schnittstelle.

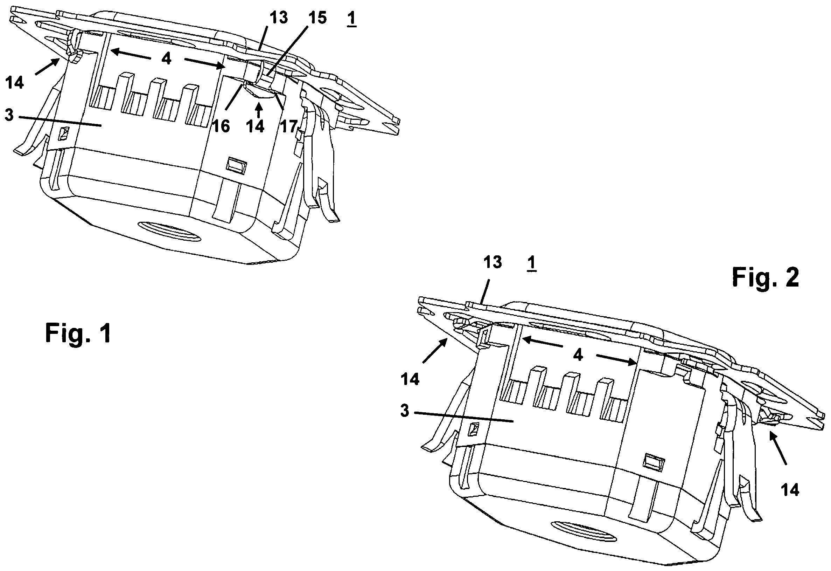

In Fig. 1 ist eine perspektivische Seitenansicht eines Unterputzeinsatzes dargestellt. Der Unterputzeinsatz 1 eines elektrischen / elektronischen Installationsgerätes der Hausinstallationstechnik ist allgemein aus einem Gerätesockel 3 und einem daran befestigten Tragring 13 aus Metall zusammengesetzt. Erfindungsgemäß greifen Stege 15 von Laschen 14 des Tragrings 13 um mechanische Schnittstellen 4 aus Kunststoff an der Mantelfläche des Gerätesockels 3, um derart die Befestigung des Tragrings 13 am Gerätesockel 3 zu bewerkstelligen. Wie zu erkennen ist, besitzt der Steg 15 an seinem Ende zu beiden Seiten Seitenschneiden 16, 17, welche kraftschlüssig in Eingriff mit der mechanischen Schnittstelle 4 sind. Dabei sind vorzugsweise vier derartiger Befestigungen in symmetrischer Weise an Tragring 13 und Gerätesockel 3 vorgesehen. Zweckmäßig werden die Laschen 14 des Tragrings 13 vorzugsweise durch entsprechende Ausstanzungen am Tragring hergestellt.

In Fig. 2 ist eine perspektivische Seitenansicht eines Unterputzeinsatzes 1 vor der Befestigung des Tragrings am Gerätesockel dargestellt. Es ist zu erkennen, dass die Laschen 14 des Tragrings 13 im Wesentlichen parallel zur Hauptebene des Tragrings 13 verlaufen und noch nicht in die mechanischen Schnittstellen 4 des Gerätesockels 3 eingreifen.

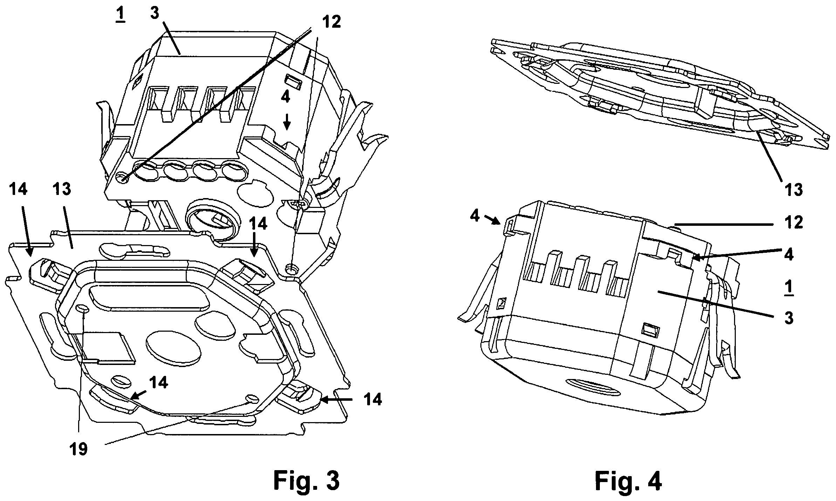

In Fig. 3 ist eine perspektivische "Explosionsansicht" eines Unterputzeinsatzes 1 eines elektrischen / elektronischen Installationsgerätes der Hausinstallationstechnik dargestellt. Dabei ist gezeigt, dass die Frontseite des Gerätesockels 3 zwei diagonal angeordnete Führungszylinder 12 aufweist, zu denen zwei Bohrungen 19 im Tragring 13 in korrespondierender Art und Weise derart angeordnet sind, dass bei Aufeinanderstecken des Tragrings 13 auf den Gerätesockel 3 eine verdrehsichere Arretierung des Tragrings 13 gegenüber dem Gerätesockel 3 in definierter Weise erfolgt. Des Weiteren sind die vier Laschen 14 des Tragrings 13 und eine der mechanischen Schnittstellen 4 des Gerätesockels 3 gekennzeichnet.

In Fig. 4 sind Gerätesockel und Tragring 13 des Unterputzeinsatzes 1 als getrennte Baukomponenten dargestellt, wobei die Ausbildung der mechanischen Schnittstellen 4 des Gerätesockels 3 und einer der Führungszylinder 12 klar zu erkennen ist.

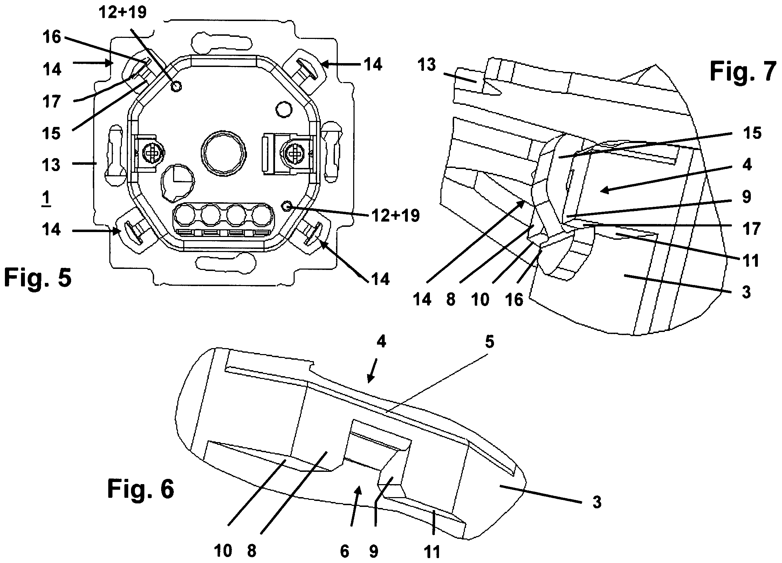

In Fig. 5 ist eine Sicht auf die Frontseite eines Unterputzeinsatzes 1 vor der Befestigung des Tragrings am Gerätesockel dargestellt. Es sind insbesondere die symmetrische Anordnung der vier Laschen 14 des Tragrings 13 und die beiden Führungszylinder 12 zu erkennen, welche durch die erwähnten Bohrungen 19 des Tragrings 13 greifen. Die Ausgestaltung der Laschen 14 mit Steg 15 und zwei endseitigen Seitenschneiden 16, 17 sind zu erkennen.

In Fig. 6 ist eine Detailansicht einer mechanischen Schnittstelle dargestellt. Die vorzugsweise einstückig am Gehäusemantel des Gerätesockels 3 "angeformte", aus Kunststoff bestehende mechanische Schnittstelle 4 weist eine Nut 6 mit der Breite B auf, welche beidseitig von je einer Seitenrippe 8, 9 begrenzt wird. Um ein exaktes Umbiegen einer Lasche 14 sicherzustellen, ist die im montierten Zustand dem Tragring 13 zugewandte Seite der mechanischen Schnittstelle 4 steif ausgebildet und besitzt hierzu einen relativ steifen Biegekern 5, welcher beispielsweise mittels einer integrierten Metallplatte realisiert wird. Von Wichtigkeit sind des Weiteren die ausgeprägten Unterkanten 10 bzw. 11 der Seitenrippen 8 bzw. 9, denn diese Unterkanten dienen dem kraftschlüssigen Eingriff der Seitenschneiden 16, 17 der Lasche 14.

In Fig. 7 ist eine Detailansicht zur Erläuterung der Befestigung der Lasche an der mechanischen Schnittstelle des Gerätesockels 3 dargestellt. Der Steg 15 der Lasche 14 des Tragrings 13 greift rechtwinklig um den Biegekern 5 und taucht unter einer weiteren Abbiegung von ca. 10...45° in die von den beiden Seitenrippen 8, 9 begrenzte Nut 6 der mechanischen Schnittstelle 4. Der Steg 15 weist eine Breite C auf, die kleiner ist als die Nut 6 die Breite B. Von Wichtigkeit sind endseitig des Steges 15 angeordnete Seitenschneiden 16, 17, die auf den Unterseiten 10, 11 der beiden Seitenrippen 8, 9 aufsitzen und über ihre scharfkantigen Seitenschneiden 16, 17 zumindest abschnittsweise in diese Unterseiten 10, 11 einschneiden.

### Bezugszeichenliste

- 1: Unterputzeinsatz eines elektrisches / elektronischen Installationsgeräts
- 2: -
- 3: Gerätesockel
- 4: mechanische Schnittstelle aus Kunststoff
- 5: Biegekern
- 6: Nut mit Breite B
- 7: -
- 8: Seitenrippe
- 9: Seitenrippe
- 10: Unterseite der Seitenrippe
- 11: Unterseite der Seitenrippe
- 12: Führungszylinder
- 13: Tragring aus Metall
- 14: Lasche
- 15: Steg mit Breite B
- 16: Seiteschneide
- 17: Seiteschneide
- 18: -
- 19: Bohrung
- 20: -

## Patentansprüche

1. Unterputzeinsatz (1) eines elektrischen / elektronischen Installationsgerätes der Hausinstallationstechnik mit Gerätesockel (3) und Tragring (13),
• wobei der Gerätesockel (3) an seiner Mantelfläche mehrere mechanische Schnittstellen (4) aufweist, welche jeweils aus einer von zwei Seitenrippen (8, 9) begrenzten Nut (6) gebildet sind,
• wobei der Tragring (13) mehrere Laschen (14) aufweist, welche jeweils einen Steg (15) besitzen,
• wobei zur Befestigung des Tragrings (13) am Gerätesockel (3) die umgebogenen Stege (15) in die Nuten (6) eingreifen,
• **dadurch gekennzeichnet, dass** der Steg (15) einer Lasche (14) endseitig Seitenschneiden (16, 17) aufweist, welche im umgebogenen Zustand kraftschlüssig in die Seitenrippen (8, 9) eingreifen und einschneiden, und
• wobei die Seitenrippen (8, 9) der mechanischen Schnittstellen (4) ausgeprägte Unterseiten (10, 11) für den Eingriff der Seitenschneiden (16, 17) aufweisen.

2. Unterputzeinsatz (1) nach Anspruch 1, **dadurch gekennzeichnet, dass** die im montierten Zustand dem Tragring (13) zugewandte Seite der mechanischen Schnittstelle (4) mittels eines Steges versteift ist, welcher gleichzeitig als Biegekern (5) für die Verformung der Lasche (14) genutzt wird.

3. Unterputzeinsatz (1) nach Anspruch 1, **dadurch gekennzeichnet, dass** der Biegekern (5) im fertig montierten Zustand ein Widerlager für die umgebogene Lasche (14) bildet und sich somit eine formschlüssige Verbindung ausbildet.

4. Unterputzeinsatz (1) nach Anspruch 1, **dadurch gekennzeichnet, dass** die Frontseite des Gerätesockels (3) mindestens zwei Führungszylinder (12) aufweist, zu denen Bohrungen (19) im Tragring (13) in korrespondierender Weise angeordnet sind.

## Claims

1. Flush-mounted insert (1) of an electrical/electronic installation device for domestic installation, comprising a device base (3) and a supporting ring (13),
· wherein the device base (3) has, on its lateral surface, a plurality of mechanical interfaces (4) which are each formed from a groove (6) which is delimited by two side ribs (8, 9),
· wherein the supporting ring (13) has a plurality of lugs (14) which each have a web (15),
· wherein the bent-over webs (15) engage into the grooves (6) in order to fasten the supporting ring (13) to the device base (3),
**characterized in that**
· the web (15) of a lug (14) has, at the end, lateral cutting edges (16, 17) which engage and cut into the side ribs (8, 9) in a force-fitting manner in the bent-over state, and
· wherein the side ribs (8, 9) of the mechanical interfaces (4) have pronounced bottom sides (10, 11) for the engagement of the lateral cutting edges (16, 17).

2. Flush-mounted insert (1) according to Claim 1, **characterized in that** the side of the mechanical interface (4) that faces the supporting ring (13) in the mounted state is reinforced by means of a web which is simultaneously used as a bending core (5) for the deformation of the lug (14).

3. Flush-mounted insert (1) according to Claim 1, **characterized in that** the bending core (5), in the finally mounted state, forms an abutment for the bent-over lug (14) and therefore forms an interlocking connection.

4. Flush-mounted insert (1) according to Claim 1, **characterized in that** the front side of the device base (3) has at least two guide cylinders (12) for which bores (19) are arranged in a corresponding manner in the supporting ring (13).

## Revendications

1. Insert encastré (1) pour un appareil d'installation électrique / électronique de la technique d'installation domestique avec socle d'appareil (3) et anneau de support (13), dans lequel
- le socle d'appareil (3) présente, au niveau de sa surface d'enveloppe, plusieurs interfaces mécaniques (4) qui sont chacune formées par une rainure (6) délimitée par deux ailettes latérales (8, 9),
- l'anneau de support (13) présente plusieurs pattes (14) qui possèdent chacune une nervure (15),
- les nervures repliées (15) s'engagent dans les rainures (6) pour la fixation de l'anneau de support (13) sur le socle d'appareil (3),
- **caractérisé en ce que**
la nervure (15) d'une patte (14) présente, du côté de l'extrémité, des arêtes latérales (16, 17) qui, dans l'état replié, s'engagent et mordent par engagement par force dans les ailettes latérales (8, 9), et
- les ailettes latérales (8, 9) des interfaces mécaniques (4) présentant des côtés inférieurs emboutis (10, 11) pour l'engagement des arêtes latérales (16, 17).

2. Insert encastré (1) selon la revendication 1, **caractérisé en ce que** le côté de l'interface mécanique (4) tourné vers l'anneau de support (13) dans l'état monté est rigidifié au moyen d'une nervure qui est utilisée simultanément en tant que noyau flexible (5) pour la déformation de la patte (14).

3. Insert encastré (1) selon la revendication 1, **caractérisé en ce que** le noyau flexible (5), dans l'état monté définitif, forme une butée pour la patte repliée (14), et il se forme ainsi une connexion par engagement par correspondance de formes.

4. Insert encastré (1) selon la revendication 1, **caractérisé en ce que** le côté avant du socle d'appareil (3) présente au moins deux cylindres de guidage (12) par rapport auxquels des alésages (19) dans l'anneau de support (13) sont disposés de manière correspondante.
